# EUROPEAN PATENT APPLICATION

(11) **EP 1 870 008 A1**
(43) Date of publication of application: **26.12.2007**
(21) Application number: 06115865.5
(22) Date of filing: 22.06.2006
(51) Int. Cl.: A47K 5/12, B05B 11/00, G01F 11/02

(54) **A package for dosing and dispensing liquids**

(71) Applicant: The Procter and Gamble Company, Cincinnati, Ohio 45202 (US)
(72) Inventor: Vangeel, Filip, 1800, Vilvoorde (BE); Dewree, Ann, 9406, Outer (BE)
(74) Representative: Mather, Peter Geoffrey

(57) **Abstract**

The present invention relates to a package (1) for dosing and dispensing fluid products, preferably laundry detergents, comprising:
a container (10);
a positive displacement pump (20); and
a dosing cup (30);

wherein the container (10) comprises walls which define a longitudinal axis (14) of the container (10), wherein the walls of the container (10) are substantially rigid,
wherein the container (10) contains the fluid product, and wherein the container (10) is in fluid communication with the pump (20),
wherein the pump (20) cooperates with the dosing cup (30) to enable the pump (20) to be actuated by a displacement of the container (10) relative to the dosing cup (30) in a direction substantially parallel to the longitudinal axis (14) of the container (10) so that a measured dose is discharged downwardly through the pump (20) from the container (10) into the dosing cup (30).

The present invention further relates to a method for dosing and dispensing fluid products using the package of the invention, and preferably to a method for dosing and dispensing laundry detergents into a washing machine.

## Description

The present invention relates to a package for dosing and dispensing fluid products, preferably laundry detergents, comprising a container, a pump, and a dosing cup. The present invention further relates to a method for dosing and dispensing fluid products, and preferably to a method for dosing and dispensing laundry detergents for use in a washing machine.

Pouring fluid products as widely diverse as drinks, medicaments, personal care products such as soap, and detergent, from a storage container such as a bottle, is a task carried out on a regular and frequent basis. Most commonly fluid products need to be poured from a large container into a smaller container prior to consumption. For some products, especially medicaments, the dispensing of an accurately metered volumetric dose is particularly important.

Various devices are well-known in the art for dosing and dispensing fluids products but they have many draw-backs. Disadvantages are particularly acute for elderly or infirm consumers. Firstly the large container in which the fluid product is stored needs to be opened, often by means of unscrewing a lid or cap which can be particularly difficult for consumers with arthritic fingers. Secondly the large container needs to be lifted and manipulated for pouring, again difficult for infirm consumers especially where the container contains more than 1 or 2 litres of fluid product. Thirdly it is often necessary to measure the volume of fluid poured into the smaller container against indicia or lines marked on the smaller container. This is difficult for blind or partially-sighted consumers.

One attempt to overcome these disadvantages has been to combine a container having flexible walls with a dosing device. The container can be squeezed in order to transfer fluid product into the dosing device from which it can be dispensed.

US 6,705, 492, issued on March 16th 2004, discloses a bottom-dispensing container for liquid products, such as soap, that allows the user to grasp and squeeze the container to discharge the product.

US 6,702,155, issued on March 9th 2004, discloses an apparatus and method of delivering adjustable metered doses of a composition from a squeezable container.

WO92/10727, published on June 25th 1992, discloses a cylindrical dosing chamber located in the outlet neck of the container. The container has a flexible wall which can be squeezed to move a piston reciprocally within the dosing chamber.

Other prior art systems comprise an actuator and a dip-tube. However use of a dip-tube results in residual product in the package which it is not possible to dispense at the end of the package's use.

All of the prior art solutions which involve one or more of the manual operations of lifting, pouring or squeezing the container are, at best, inconvenient for elderly or infirm consumers and may result in messy spillage. It also proves very difficult to pour, squeeze or otherwise dispense the entire content of the container.

The present invention provides a package which can easily and accurately dispense a measured dose of a fluid product without any of these disadvantages. The package is particularly convenient for elderly or infirm consumers. The present invention also enables essentially all of the fluid to be evacuated from the package.

### Summary of the Invention

In a first aspect the present invention concerns a package for dosing and dispensing fluid products comprising a container; a positive displacement pump; and a dosing cup;
wherein the container comprises walls which define a longitudinal axis of the container,
wherein the walls of the container are substantially rigid, wherein the container contains the fluid product, and wherein the container is in fluid communication with the pump,
wherein the pump cooperates with the dosing cup to enable the pump to be actuated by a displacement of the container relative to the dosing cup in a direction substantially parallel to the longitudinal axis of the container so that a measured dose is discharged downwardly through the pump from the container into the dosing cup.

In a second aspect the present invention concerns method for dosing and dispensing a fluid product comprising the steps of:
- dispensing a measured dose of the fluid product from a package, wherein the package comprises a container; a positive displacement pump; and a dosing cup;
wherein the container comprises walls which define a longitudinal axis of the container, wherein the walls of the container are substantially rigid, wherein the container contains the liquid detergent product, and wherein the container is in fluid communication with the pump;
- actuating the pump by a displacing relative to one another the container and the dosing cup in a direction substantially parallel to the longitudinal axis of the container so that a measured dose is discharged downwardly through the pump from the container into the dosing cup.

Preferably there is provided a method for dosing and dispensing a liquid detergent into a washing machine further comprising the steps of:
- placing the dosing cup containing the measured dose of liquid detergent into the washing machine; and
- starting a washing cycle of the washing machine.

### Brief Description of the Drawings

Figure 1 is a cross-section through a package of the present invention.
Figure 2 is an exploded perspective view of the pump assembly shown in Figure 1.
Figure 3 shows top and bottom views of the pump assembly shown in Figures 1 and 2.
Figure 4 shows a cross-section through an alternative pump assembly, the pump assembly being shown with the chamber open, Figure 4a, and with the chamber compressed, Figure 4b.

### Detailed Description of the Invention

By "fluid product" what is meant herein is any product which can flow under gravity. Fluid products may include granular or powdered products, but it is preferred herein that fluid products are liquid products. The present invention is particularly useful for dosing and dispensing of viscous liquid products as defined in more detail below.

The "container" as defined herein comprises walls which define a longitudinal axis of the container. The walls of the container are substantially rigid by which it is meant that the container cannot be deformed, or can only be slightly deformed, by squeezing with a consumer's hand.

A suitable container for storing and packaging liquids for household use, especially when the fluid product is a liquid detergent, may be of any form or size suitable. For example, in one embodiment, the container has a capacity of 100 ml to 3000 ml, more preferably 250 ml to 1500 ml. The container is preferably suitable for easy handling, for example the container may have a handle or a part with such dimensions as to allow easy lifting or carrying the container with one hand. In a particularly preferred execution the container is designed to be replaced in the package assembly when empty by a refill container.

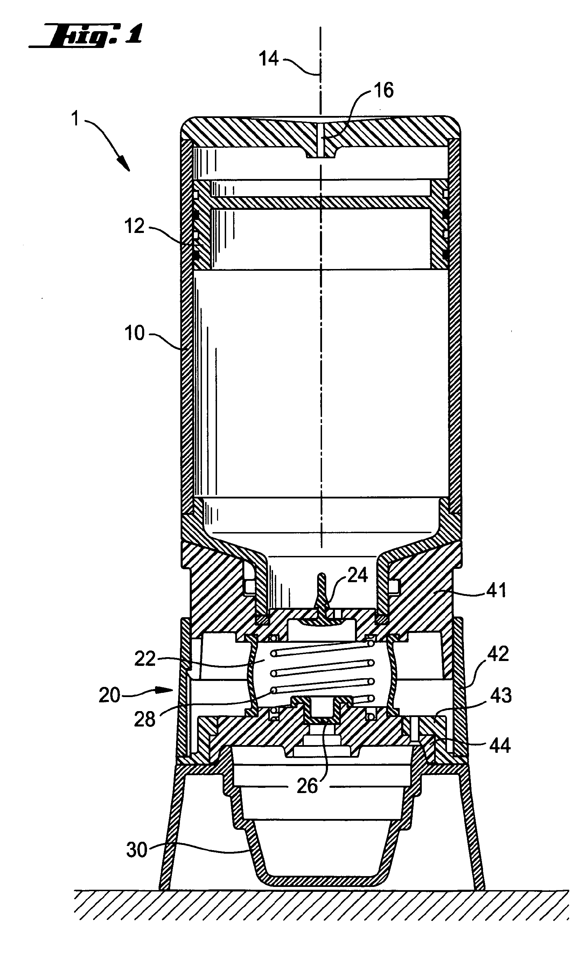

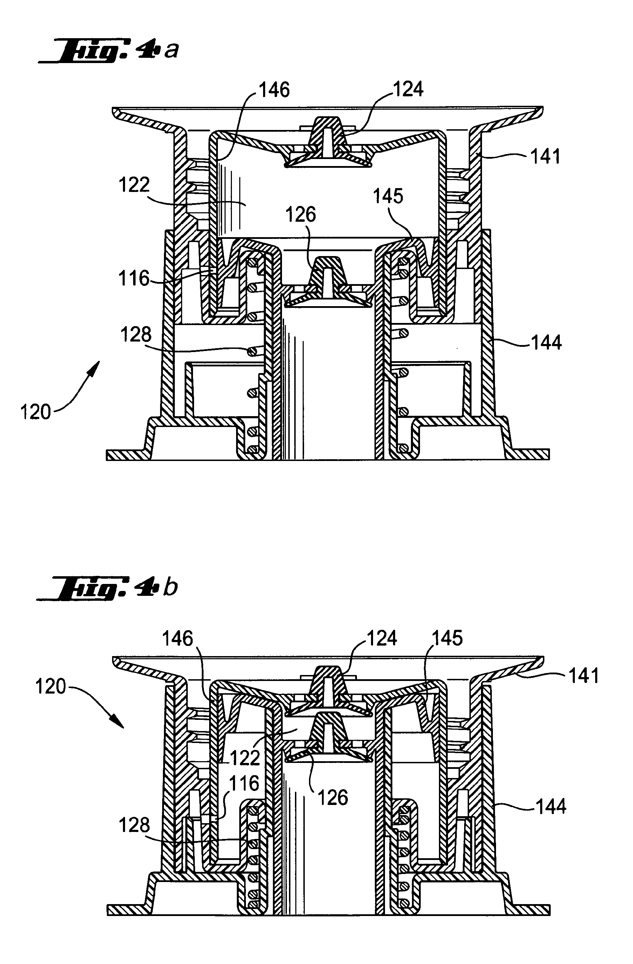

A venting means is usually so that air can enter into the container as the fluid product is dispensed. The venting means may be provided in the container (see Figure 1), or, preferably, in the pump (see Figure 4). The venting means allows air to enter into the container but does not allow the fluid product to leak out of the container. Low viscosity liquids are very likely to enter the pump housing via the venting means and prevent the pump from working. Consequently it is preferred in the present invention that the fluid product is a liquid having a viscosity such as to avoid the venting means from flooding.

Alternatively the substantially rigid container may comprise a flexible, collapsible bag containing the fluid product. This embodiment of the invention may be achieved either by a "bag-in-bottle" system, or by providing a detachable lining within the container, for example a multi-layer wall structure in which the inner layer delaminates from the rest of the container wall and progressively collapses as the fluid product is dispensed.

In a still further embodiment the substantially rigid container walls may encompass a piston which is progressively drawn essentially along the longitudinal axis of the container as the fluid product is dispensed, thereby reducing the internal volume of the container ("airless system").

The container walls may, in whole or in part, be opaque, translucent or transparent. Translucent or transparent container walls permit the consumer to see the fluid product contained within the container and may enable the consumer to see how much fluid product remains in the container, and/or may enable various aesthetic effects. Aesthetic effects may be achieved by using opaque, translucent or transparent liquid product and/or by incorporating other aesthetic effects such as pearlescent liquid, or liquid comprising suspended particles or suspended bubbles.

The "positive displacement pump" as defined herein as a pump which, when actuated, forces the fluid from a chamber by reducing the volume of that chamber. A typical pump further comprises an inlet valve through which fluid is admitted to the chamber, and an outlet valve through which the fluid is expelled from the chamber to complete one dispensing cycle. For the next dispensing cycle the chamber is refilled with fluid product from the container, through the inlet valve. A preferred pump further comprises one-way valves at each inlet and outlet. Pumps which are actuated by hand are typically used in the present invention.

It is preferred that the volume by which the chamber is reduced during one dispensing cycle has a predetermined volume in which case the pump is referred to as a "volumetric positive displacement pump" or simply a "volumetric pump".

A single dispensing cycle preferably doses from 5ml to 100ml of the fluid product, preferably from 10 to 50ml. The consumer has the option of a single dose of, for example 18ml, or dispensing twice to provide double the single dose, in this example, 36ml. This is particularly useful in detergent applications where a single dose provides for a lightly soiled load, and a double dose provides for a heavily soiled load.

In a particularly preferred pump the chamber acts as a bellows, an example of which is the Keltec bellows system commercially available from the Kaufman Container Company, Ohio, USA. Such a chamber may be constructed from silicone.

An alternative, preferred, positive displacement pump comprises a mechanism which expands a sealed cavity to create a vacuum. Some air is pushed from the chamber into the cavity. The cavity is then sealed from the chamber, opened to the atmosphere, and squeezed back to its closed position. This method of pumping is used for manual water pumps, and more sophisticated systems using the same principle are used for industrial applications.

The present invention relates also to a method for dosing and dispensing a fluid product from a package as described above.

According to the present invention the package comprises the container, the pump and a dosing cup which, when assembled and positioned ready for use, comprise the dosing cup as the bottom element, the pump cooperating with the dosing cup to enable the pump to be actuated by a displacement of the container relative to the dosing cup in a direction substantially parallel to the longitudinal axis of the container so that a measured dose is discharged downwardly through the pump, from the container into the dosing cup. The dosing cup may also be provided with a docking station for easily assembling to, and disassembling from, the pump. Hence the need for lifting and pouring from the container, or for squeezing the container, is avoided.

By "displacement of the container relative to the dosing cup" it is foreseen that: i) the container may be fixed, for example to a wall by means of a bracket, and the dosing cup is pushed upwards towards the fixed container; or ii) the dosing cup may be stationary, for example resting on a fixed horizontal surface such as work surface, and the container is pushed downwards towards the dosing cup; or iii) both container and dosing cup are free to move and they are displaced towards each other.

A particular preferred embodiment of the present invention relates to a method of dosing and dispensing a liquid detergent into a washing machine.

"Liquid detergent", as used herein, refers to any laundry treatment composition comprising a fluid capable of wetting and cleaning fabric e.g., clothing, in a domestic washing machine. The composition can include solids or gases in suitably subdivided form, for example suspended particles or bubbles. Compositions which are overall gases are excluded. The liquid detergent preferably have densities in the range from about 0.9 to about 1.3 grams, more preferably from about 1.00 to about 1.10 grams per cubic centimeter, excluding any suspended particles but including any bubbles, if present.

Preferably, the compositions and methods herein have a neat viscosity, Vₙ, of from about 1,000 cps (or equivalently, millipascal seconds, mPas) to about 10,000 cps as measured at 20 s⁻¹, more preferably from about 2,000 cps to about 5,000 cps as measured at 20 s⁻¹, and a diluted viscosity, V_{d}, that is less than or equal to about 0.5Vₙ, as measured at 20 s⁻¹, preferably less than about 0.3Vₙ, as measured at 20 s⁻¹. As used herein, "neat viscosity, Vₙ" refers to the viscosity of the undiluted liquid detergent. As used herein, "diluted viscosity, V_{d}" refers to the viscosity of a 50% by weight aqueous solution of a liquid detergent composition used in the methods of the present invention. In another more specific embodiment, when the liquid detergent composition is shear thinning, the composition may be characterized by a low-shear neat viscosity Vₗₛ of from about 10,000 cps to about 500,000 cps as measured at 0.5 s⁻¹, more preferably from about 10,000 cps to about 100,000 cps as measured at 0.5 s⁻¹. The water used to prepare the aqueous solution for determining the diluted viscosity, V_{d} of a composition is deionized water. All viscosity measurements are made at 21°C.

The dilution procedure and the viscosity measurements are described hereinafter.
The viscosity of fluid detergents herein, namely Vₙ, and V_{d}, is measured using a TA AR550 Rheometer, manufactured by TA Instruments Ltd., Bilton Center, Cleeve Road, Letherhead, Surrey KT22 7UQ, United Kingdom. The software used is provided with the instrument and called "Rheology Advantage Instrument Control AR".
The instrument is set up before each measurement according to the instructions reported in the Manual "AR550 Rheometer Instrument and accessory manual" (Jan 2004, PN500034.001 rev F) pp. 25-29, 40-44, and the Manual "Rheology advantage Instrument Control Getting Started Guide" (Jan 2004, Revision E) pp. 9-14, 20, 25-28, 37-38. The settings and parameters used are described herein. In the "Geometry" section of the software (see Rheology advantage Instrument Control Getting Started Guide" (Jan 2004, Revision E) p9), the gap between the rotating plate (40mm steel plate) and the sample platform (Peltier plate) is set at 500 microns. The procedure is a continuous ramp test, i.e. a procedure in which the rheology of the sample is measured versus increasing shear rate. The setting for the shear rate ranges from 0.04 s⁻¹ to 30 s⁻¹ with a total duration of 3 minutes for the continuous ramp test, and sampling of 20 points per each tenfold increase in shear rate (automatically done), providing in total 60 measurements. Temperature is set at 21°C.

A sample of liquid detergent loaded into the rheometer using a loading procedure as described herein. The sample loading procedure (as described in detail in the manual) is as follows:
1. The temperature is checked (see "instrument status" section) to see if it matches the set temperature. If the temperature is not correct, the settings need to be verified following the instructions in the manual.
2. The sample is loaded using a plastic pipette with a minimum diameter of 4mm at the tip (to minimize the impact of the stress carried out by the loading action on the rheology of the sample). A minimum amount of 5 ml needs to be applied in the center of the peltier plate to assure full product coverage of the rotating plate.
3. The rotating plate (plate connected to the measuring system) is brought to the set distance (as defined above).
4. The excess of sample (i.e. any sample that may be around the edges of the rotating plate) is removed with a spatula assuring correct loading of the sample according to the description in the manual.
   The measurement steps are as follows:
5. After the sample is loaded, it needs to be left for 10 seconds at rest. The run is started, while making sure the equipment is not exposed to vibrations during the measurement, as this will affect the results. In the case that the measurement is influenced by vibrations, the experiment is repeated whilst excluding the source of vibration.
6. At the end of the run the program stops automatically. All viscosity data are automatically saved.
7. The plates are cleaned with water and ethanol and then dried with paper towel.

The viscosity data, Vₙ, quoted herein is determined at a shear rate of 20s⁻¹. In case no measurement was taken at exactly 20s⁻¹, the data are calculated based on interpolation of the data points which are closest to the 20s⁻¹ point.

Table 1 shows examples of liquid detergent compositions.

**Table 1**

| Ingredients | 1 | 2 | 3 |
|---|---|---|---|
| | % by weight | % by weight | % by weight |
| Alkylbenzenesulfonic acid | 17.2 | 12.2 | 23 |
| C12-14 alcohol 7-ethoxylate | 8.6 | 0.4 | 19.5 |
| C14-15 alcohol 8-ethoxylate | - | 9.6 | - |
| C12-14 alcohol 3-ethoxylate sulphate, Na salt | 8.6 | - | - |
| C8-10 Alkylamidopropyldimethyl amine | - | - | 0.9 |
| Citric acid | 2.9 | 4.0 | - |
| C12-18 fatty acid | 12.7 | 4.0 | 17.3 |
| Enzymes | 3.5 | 1.1 | 1.4 |
| Ethoxylated polyimine | 1.4 | - | 1.6 |
| Ethoxylated polyimine polymer, quaternized and sulphated | 3.7 | 1.8 | 1.6 |
| Hydroxyethane diphosphonic acids (HEDP) | 1.4 | - | - |
| Pentamethylene triamine pentaphosphonic acid | - | 0.3 | - |
| Catechol 2, 5 disulfonate, Na salt | 0.9 | - | - |
| Fluorescent whitening agent | 0.3 | 0.15 | 0.3 |
| 1,2 propandiol | 3.5 | 3.3 | 22 |
| Ethanol | - | 1.4 | - |
| Diethylene glycol | - | 1.6 | - |
| 1-ethoxypentanol | 0.9 | - | - |
| Sodium cumene sulfonate | | 0.5 | - |
| Monoethanolamine (MEA) | 10.2 | 0.8 | 8.0 |
| MEA borate | 0.5 | 2.4 | - |
| Sodium hydroxide | - | 4.6 | - |
| Perfume | 1.6 | 0.7 | 1.5 |
| Water | 22.1 | 50.8 | 2.9 |
| Perfume, dyes, miscellaneous minors | Balance | Balance | Balance |

The viscosity Vₙ of the liquid detergent compositions are measured according to the protocol reported above.

Then the compositions are diluted with water according to the following protocol. 100 grams of composition are weighted in a plastic beaker. The beaker is stirred with a mechanical stirrer rotating at low speed 200 rpm to avoid entrapment of air into the product. While stirring, 50 ml of deionized water are added to the composition. The composition is stirred for 4 minutes, until the composition is fully homogeneous. The composition is allowed to rest for 15 minutes before starting the viscosity measurement.
The whole procedure is carried out at room temperature.
The viscosity data Vₙ and V_{d} are reported in table 2.

**Table 2**

| | 1 | 2 | 3 |
|---|---|---|---|
| Undiluted viscosity (Vₙ) at 20 s⁻¹, cps | 2700 | 400 | 300 |
| Diluted Viscosity (V_{d}) at 20 s⁻¹, cps | 250 | 315 | 220 |

The cleaning performance of the Composition 1, Table 1 was tested. The following conditions were used: a Western European horizontal axis washing machine, such as, a Bosch Maxx® WFL2450 washing machine manufactured by Bosch Siemens, a water hardness of 2.5 mmoles / liter, a wash temperature of 40°C, regular cotton cycle, a load of 1.5 kg of cotton items, including 16 different stain types. Composition 1 was tested at a dosage of 35 grams/wash, and compared with a commercial sample of Ariel® liquid Compact (from Procter & Gamble Ltd.), which was tested at 80 grams/wash, under the same conditions and with the same stains. Both the Composition 1 and the comparative Ariel® liquid Compact composition are each placed in their own dosing device such as a commercial dosing ball, and these are placed directly in the washer drum. Then the soiled fabrics are added and the cycle of the washer is started up.

By "washing machine" what is meant herein is an appliance for washing articles especially laundry or kitchenware. Preferably the washing machine is a laundry washing machine. Domestic washing machines are foreseen for use in the method herein, but the method could also be applied to institutional washing machines such as those used in commercial laundries, hotels, restaurants, hospitals, for example.

Particular embodiments of the present invention will be explained in detail with reference to the drawings.

Figure 1 shows a cross-section through a package 1 according to the present invention. The package sits upon a dosing cup 30 which, in turn, rests upon any substantially horizontal surface. The pump, which comprises a pump chamber 22 within a pump housing 41, 42, 43, 44 is in contact with and rests upon the upper surface of the dosing cup 30. The pump also comprises an outlet valve 26 which is positioned above the dosing cup 30. In the embodiment shown in Figure 1 the outlet valve 26 is a duckbill valve. The container 10 is inverted and is in fluid communication with the pump by means of an inlet valve 24. In the embodiment shown in Figure 1 the inlet valve 24 is an umbrella valve. The container 10 shown in Figure 1 is detachably connected to the pump housing 41 so that the container 10 can be removed and replaced by a refill when the fluid product within the container has all been used. The detachable connection may be achieved by any conventional means including screw-fitting, bayonet fitting. The container 10 comprises substantially rigid walls which define a longitudinal axis 14 and a piston 12. The piston 12 moves substantially along the longitudinal axis within the container 12 to reduce the internal volume of the container 10 as fluid product is dispensed. The container 10 further comprises a base and a vent 16.

In use the consumer presses down upon the container 10, either by pressing down on the base of the upturned container 10 or by gripping the substantially rigid side walls and pressing downwards. The downward pressure causes the container 10 to be displaced relative to the dosing cup 30 which is supported by the substantially horizontal surface on which it rests. The relative displacement actuates the pump and causes a metered dose of fluid product to be dispensed by gravity from the pump chamber 22, through the outlet valve 26, into the dispensing cup 30. The dispensing cup containing the measured dose is then removed from the package assembly and taken to the point of use.

When the applied pressure is released the spring 28 causes the chamber 22 to return to its original position, and the next dose of fluid product is drawn from the container 10, through the inlet valve 24, into the pump chamber in preparation for the next actuation of the pump.

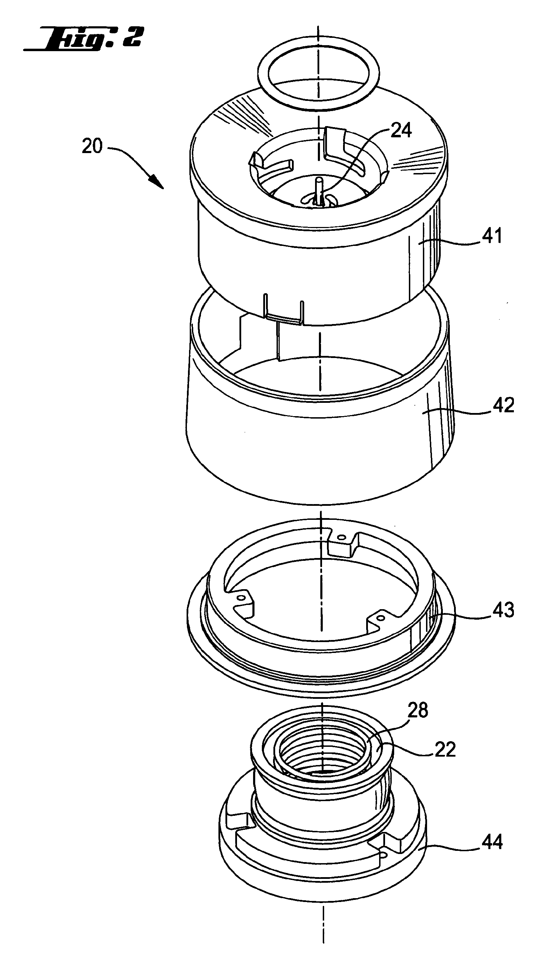

Figure 2 shows an exploded view of the pump assembly wherein the pump housing comprises four components: the pump body 41, pump collar 42, transition piece 43 and pump end cap 44. In Figure 2 the pump chamber 22 and the lifting spring 28 are also shown in position seated on the lower pump housing. In Figure 2 a sealing ring is also shown which provides a fluid seal between the upper pump housing and the neck of the container 10.

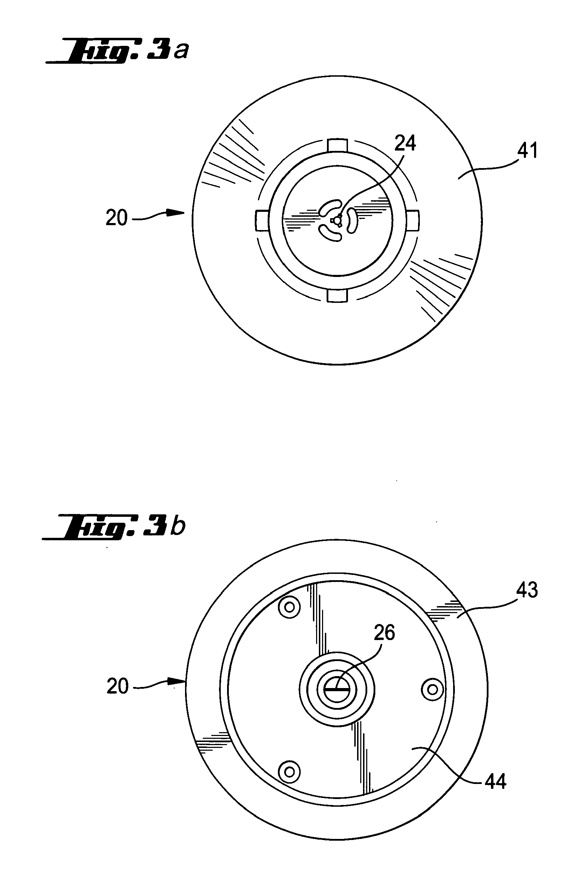

Top and bottom views of the assembled pump are shown in Figure 3a and 3b. In Figure 3a the pump body 41 and inlet valve 24 are shown. In Figure 3b the transition piece 43, the pump end cap 44, and the outlet valve 26 are shown.

Figure 4a shows a cross-section through an alternative positive displacement pump 120 shown with the lifting spring 128 extended and the chamber 122 open. The pump 120 comprises a body 141 and an end cap 144. A cylinder 146 fixed within the body 141 defines the chamber 122 and is provided with an inlet valve 124 and a venting means 116. At the outlet from the chamber 122 is an outlet valve 126 which is clipped into the piston 145. The lifting spring 128 is shown extended for maximum displacement of the body 141 from the end cap 144.

When the pump is actuated the body 141 slides downwards, compressing the lifting spring 128 and reducing the volume of chamber 122 as shown in Figure 4b. The liquid inside chamber 122 is compressed and forced out via outlet valve 126. As the piston 145 moves upwards, relative to the cylinder 146, the venting means 116 opens to the atmosphere, allowing air to flow under atmospheric pressure into the container via a venting path.

At the end of the stroke the lifting spring 128 relaxes to its original position and pushes the body 141 back upwards. This movement creates a vacuum in the chamber 122 and opens inlet valve 124, allowing the fluid product to flow into the chamber 122, thus completing one dispensing cycle.

In this embodiment the components are made from polyethylene except for the thermoplastic elastomer inlet and outlet valves (124, 126) and the stainless steel return spring (128).

## Claims

1. A package (1) for dosing and dispensing fluid products comprising:
a container (10);
a positive displacement pump (20); and
a dosing cup (30);
wherein the container (10) comprises walls which define a longitudinal axis (14) of the container (10), wherein the walls of the container (10) are substantially rigid,
wherein the container (10) contains the fluid product, and wherein the container (10) is in fluid communication with the pump (20),
wherein the pump (20) cooperates with the dosing cup (30) to enable the pump (20) to be actuated by a displacement of the container (10) relative to the dosing cup (30) in a direction substantially parallel to the longitudinal axis (14) of the container (10) so that a measured dose is discharged downwardly through the pump (20) from the container (10) into the dosing cup (30).

2. A package according to claim 1 wherein the pump (20) comprises a chamber (22), an inlet valve (24) and an outlet valve (26).

3. A package according to either of claims 1 or 2 wherein the fluid product is a liquid, preferably a liquid detergent.

4. A package according to claim 3 wherein the liquid is a shear-thinning liquid having a neat viscosity, Vₙ, of from 1,000 mPas to 10,000 mPas as measured at 20 s-¹, and a low-shear neat viscosity, Vₗₛ, of from 10,000 mPas to 500,000 mPas as measured at 0.5 s⁻¹.

5. A package according to any of claims 1 to 4 wherein the substantially rigid container (10) has a variable internal volume, preferably wherein the container (10) comprises substantially rigid walls and a moveable piston (12) which is contained therein.

6. A package according to any of claims 1 to 4 wherein the substantially rigid container (10) comprises a flexible, collapsible bag, and wherein the bag contains the fluid product.

7. A package according to any of claims 1 to 4 wherein the substantially rigid container (10) wherein the container (10) or the pump (20) comprises a venting means (16, 116), the venting means (16, 116) allows air to enter into the container but does not allow the fluid product to leak out of the container (10).

8. A method for dosing and dispensing a fluid product comprising the steps of:
dispensing a measured dose of the fluid product from a package (1), wherein the package (1) comprises:
a container (10);
a positive displacement pump(20); and
a dosing cup (30);
wherein the container (10) comprises walls which define a longitudinal axis (14) of the container (10), wherein the walls of the container (10) are substantially rigid, wherein the container (10) contains the liquid detergent product, and
wherein the container (10) is in fluid communication with the pump (20);
actuating the pump (20) by a displacing relative to one another the container (10) and the dosing cup (30) in a direction substantially parallel to the longitudinal axis (14) of the container (10) so that a measured dose is discharged downwardly through the pump (20) from the container (10) into the dosing cup (30).

9. A method for dosing and dispensing a fluid product according to claim 8 wherein the fluid product is a liquid detergent and wherein the liquid detergent is used in a washing machine, the method further comprising the steps of:
placing the dosing cup (30) containing the measured dose of liquid detergent into the washing machine; and starting a washing cycle of the washing machine.

10. A method for dosing and dispensing a fluid product according to either of claims 8 or 9 wherein the pump (20) is a volumetric positive displacement pump comprising a chamber (22), an inlet valve (24) and an outlet valve (26).
